# EUROPEAN PATENT APPLICATION

(11) **EP 4 586 460 A1**
(43) Date of publication of application: **16.07.2025**
(21) Application number: 25150242.3
(22) Date of filing: 03.01.2025
(51) Int. Cl.: H02J 9/06, H02J 1/10

(54) **ELECTRIC POWER SYSTEM**

(30) Priority: 12.01.2024 JP 2024003436
(71) Applicant: TOYOTA JIDOSHA KABUSHIKI KAISHA, Aichi-ken, 471-8571 (JP)
(72) Inventor: HAGINO, Keisuke, Toyota-shi, 471-8571 (JP)
(74) Representative: J A Kemp LLP

(57) **Abstract**

An electric power system (100) configured to supply electric power to a load system (200) that needs a redundant power supply configuration, the electric power system (100) includes a main power supply (110) configured to supply electric power to the load system (200) via a first line (151); a backup power supply (120) used to back up supply of electric power from the main power supply (110), and a switching unit (130) connected to the main power supply (110) and the backup power supply (120). The switching unit (130) is configured to supply electric power from the main power supply (110) to the load system (200) via a second line (152) different from the first line (151) when an output voltage of the main power supply (110) is higher than an output voltage of the backup power supply (120).

## Description

### BACKGROUND OF THE INVENTION

### 1. Field of the Invention

The disclosure relates to an electric power system that supplies electric power to a load system that is mounted on a vehicle or the like and that needs a redundant power supply configuration.

### 2. Description of Related Art

Japanese Unexamined Patent Application Publication No. 2022-093883 (JP 2022-093883 A) describes an onboard backup controller. The backup controller executes control such that electric power of a backup power supply is not consumed when a main power supply is normal and executes control such that electric power of the backup power supply is quickly supplied to a load when the main power supply is abnormal.

### SUMMARY OF THE INVENTION

In the backup controller described in JP 2022-093883 A, in a period during which the backup power supply is on standby in a state where the backup power supply is ready to perform backup operation any time, the backup power supply is controlled in a charge state. For this reason, when there occurs a failure in the main power supply and backup operation is actually performed, it takes time to switch the backup power supply from a charging control state to a discharging control state. For this reason, it may be difficult to supply necessary electric power from the backup power supply to a load within a required period of time.

The disclosure provides an electric power system that is capable of supplying necessary electric power from a backup power supply to a load within a required period of time when there occurs a failure in a main power supply and backup operation is needed.

An aspect of the disclosure provides an electric power system configured to supply electric power to a load system that needs a redundant power supply configuration includes: a main power supply configured to supply electric power to the load system via a first line; a backup power supply used to back up supply of electric power from the main power supply; and a switching unit connected to the main power supply and the backup power supply. The switching unit is configured to supply electric power from the main power supply to the load system via a second line different from the first line when an output voltage of the main power supply is higher than an output voltage of the backup power supply. The switching unit is configured to supply electric power of the backup power supply to the load system via the second line when an output voltage of the main power supply is lower than an output voltage of the backup power supply.

With the electric power system according to the aspect of the disclosure, when the main power supply fails and the output voltage decreases (or becomes zero), electric power of the backup power supply having a higher output voltage is quickly supplied to the load system by the switching unit. Thus, when the main power supply fails, it is possible to supply necessary electric power from the backup power supply to a load within a required period of time.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of an electric power system and a load system according to an embodiment of the disclosure;
FIG. 2 is a diagram that shows a circuit state in a case where the electric power system is in a backup standby state;
FIG. 3 is a diagram that shows a circuit state in a case where the electric power system is in a backup operating state; and
FIG. 4 is a diagram that shows a circuit state in a case where the electric power system is in a backup capacity ensuring state.

### DETAILED DESCRIPTION OF EMBODIMENTS

The electric power system according to the aspect of the disclosure includes a switch capable of separately handling a line that passes through a main power supply and a line through which electric power is supplied from a backup power supply. The electric power system includes a switching unit configured to not consume electric power of the backup power supply in a discharge state when the main power supply is normal and consume the electric power through backup power feeding when the main power supply fails. Thus, backup power feeding using the backup power supply when the main power supply fails is suitably performed. Hereinafter, an embodiment of the disclosure will be described in detail with reference to the accompanying drawings.

### Embodiment

### Configuration

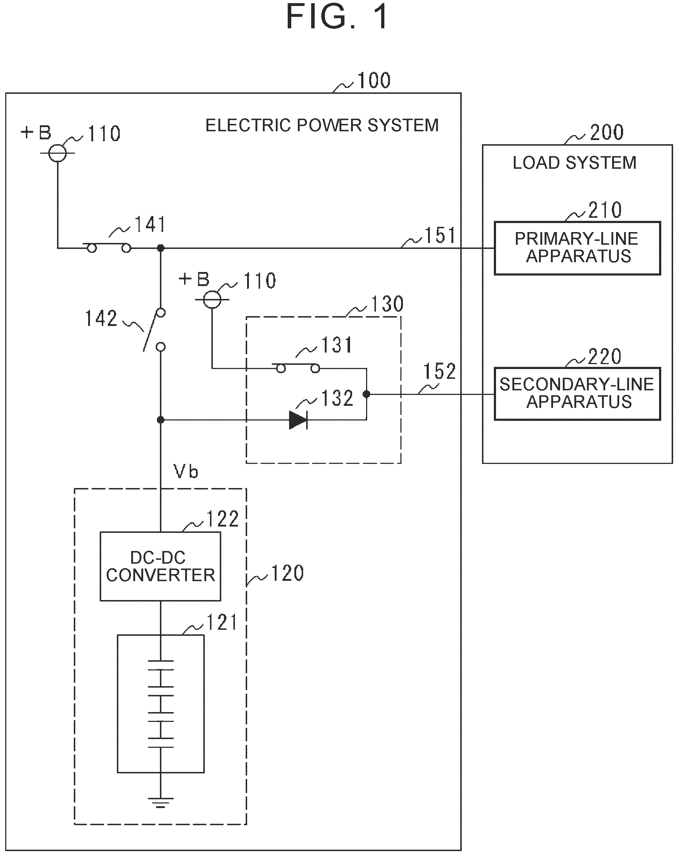

FIG. 1 is a block diagram that shows the schematic configuration of an electric power system 100 and a load system 200 that receives electric power supplied from the electric power system 100 according to one embodiment of the disclosure. The electric power system 100 and the load system 200 are mounted on a vehicle or the like.

The load system 200 is a system that operates on electric power supplied from the electric power system 100 and is a system that needs backup operation using backup electric power in an emergency. The load system 200 includes a primary-line apparatus 210 and a secondary-line apparatus 220 having the same function and performance and implements a redundant configuration by varying a power supply line to each apparatus. Examples of the load system 200 mounted on a vehicle may include a shift-by-wire (SBW) system, a brake system, and a steering system. Examples of the primary-line apparatus 210 and the secondary-line apparatus 220 may include an actuator (ACT) and an electronic control unit (ECU) that are needed for system operation. The number of the load systems 200 shown in FIG. 1 is one; however, the number of the load systems 200 that receive electric power supplied from the electric power system 100 is not limited to one.

The electric power system 100 is a system having a redundant power supply configuration in order to supply electric power to the load system 200. The electric power system 100 includes a main power supply 110, a backup power supply 120, a switching unit 130, a first switch 141, and a second switch 142.

The main power supply 110 is a power supply that supplies the load system 200 with electric power needed for the operation of the load system 200. A first line 151 and a second line 152 are configured in the electric power system 100 as lines through which electric power can be supplied to the load system 200. The first line 151 is connected to the primary-line apparatus 210 of the load system 200 via the first switch 141. The second line 152 is connected to the secondary-line apparatus 220 of the load system 200 by way of the switching unit 130 (third switch 131). The main power supply 110 is a power supply capable of supplying electric power for charging the backup power supply 120 as needed. The main power supply 110, in a vehicle, may be a power supply that constantly supplies electric power having +B voltage regardless of a status of an ignition.

The first switch 141 is a component for switching an electrical conduction or interruption state between the main power supply 110 and the primary-line apparatus 210. One end of the first switch 141 is connected to the main power supply 110, and the other end of the first switch 141 is connected to the primary-line apparatus 210 of the load system 200. The first switch 141 is electrically conductive during normal operation. When the main power supply 110 fails because of a ground fault or the like, the first switch 141 is interrupted to isolate the main power supply 110 from the load system 200 so that the influence of the failure does not reach the load system 200.

The second switch 142 is a component for switching an electrical conduction or interruption state between the backup power supply 120 and the primary-line apparatus 210. One end of the second switch 142 is connected to the primary-line apparatus 210 of the load system 200, and the other end of the second switch 142 is connected to the backup power supply 120 (DC-DC converter 122). The second switch 142 is electrically interrupted during normal operation. When the main power supply 110 is passed through or when electric power cannot be supplied to the primary-line apparatus 210 of the load system 200 due to a failure of the main power supply 110, the second switch 142 is made conductive to connect the first line 151 with the backup power supply 120.

For example, a relay unit in which two field effect transistors (FETs) of which the rectification directions of body diodes are inverted are connected in series may be used for these first switch 141 and second switch 142. Switching control of each of the first switch 141 and the second switch 142 is performed based on an instruction from a controller (not shown), such as a microcontroller.

The backup power supply 120 is a power supply for supplying backup electric power to the load system 200 instead of the main power supply 110 when there occurs an abnormality in supplying electric power from the main power supply 110 to the load system 200 due to a power supply failure or the like. The backup power supply 120 includes an electrical storage unit 121 and a DC-DC converter 122.

The electrical storage unit 121 is made up of, for example, an electrical storage element, such as a capacitor, and functions as a redundant power supply for the main power supply 110. The electrical storage unit 121 is connected to the DC-DC converter 122 so as to be chargeable and dischargeable. The electrical storage unit 121 may be made up of a secondary battery (such as a lithium ion battery) configured to be chargeable and dischargeable.

The DC-DC converter 122 is a power converter for converting input electric power to electric power having a predetermined voltage and outputting the electric power. The DC-DC converter 122 is capable of charging the electrical storage unit 121 with electric power supplied from the main power supply 110 via the first switch 141 and the second switch 142 (charging control state). The DC-DC converter 122 is capable of supplying electric power stored in the electrical storage unit 121 (backup electric power) to the primary-line apparatus 210 of the load system 200 via the second switch 142 and supplying the electric power to the secondary-line apparatus 220 of the load system 200 via the switching unit 130 (diode 132) (discharging control state). For example, a step-up/step-down bidirectional DC-DC converter is used for the DC-DC converter 122. Control of the DC-DC converter 122 is executed based on an instruction from a controller (not shown), such as a microcontroller.

The switching unit 130 is a component that connects with the main power supply 110 and the backup power supply 120 as an input source and that connects with the load system 200 as an output destination. The switching unit 130 supplies electric power of any one of the main power supply 110 and the backup power supply 120 to the secondary-line apparatus 220 of the load system 200 in preference to electric power of the other one of the power supplies. Electric power is supplied via the second line 152 different from the first line 151. The switching unit 130 includes the third switch 131 and the diode 132.

The third switch 131 is a component for switching an electrical conduction or interruption state between the main power supply 110 and the secondary-line apparatus 220. One end of the third switch 131 is connected to the main power supply 110, and the other end of the third switch 131 is connected to the secondary-line apparatus 220 of the load system 200. For example, a relay unit in which two field effect transistors (FETs) of which the rectification directions of body diodes are inverted are connected in series may be used for the third switch 131. The third switch 131 is electrically conductive during normal operation. When the main power supply 110 fails due to a ground fault or the like, the third switch 131 is interrupted to isolate the main power supply 110 from the switching unit 130 so that the influence of the failure does not reach the backup power supply 120 or the load system 200. Switching control of the third switch 131 is executed based on an instruction from a controller (not shown), such as a microcontroller.

The diode 132 is an element that rectifies from the backup power supply 120 to the secondary-line apparatus 220. An anode of the diode 132 is connected to the backup power supply 120, and a cathode of the diode 132 is connected to the secondary-line apparatus 220 of the load system 200.

With the above-described circuit configuration, when an output voltage (+B) of the main power supply 110 is higher than an output voltage (Vb) of the DC-DC converter 122 in the backup power supply 120, the switching unit 130 operates such that electric power of the main power supply 110 is supplied to the secondary-line apparatus 220 of the load system 200. On the other hand, when the output voltage (+B) of the main power supply 110 is lower than the output voltage (Vb) of the DC-DC converter 122 in the backup power supply 120, the switching unit 130 operates such that electric power of the electrical storage unit 121 in the backup power supply 120 is supplied to the secondary-line apparatus 220 of the load system 200. In other words, in the switching unit 130, control to switch a power supply source for the secondary-line apparatus 220 is executed according to which power supply has a higher output voltage.

### Control

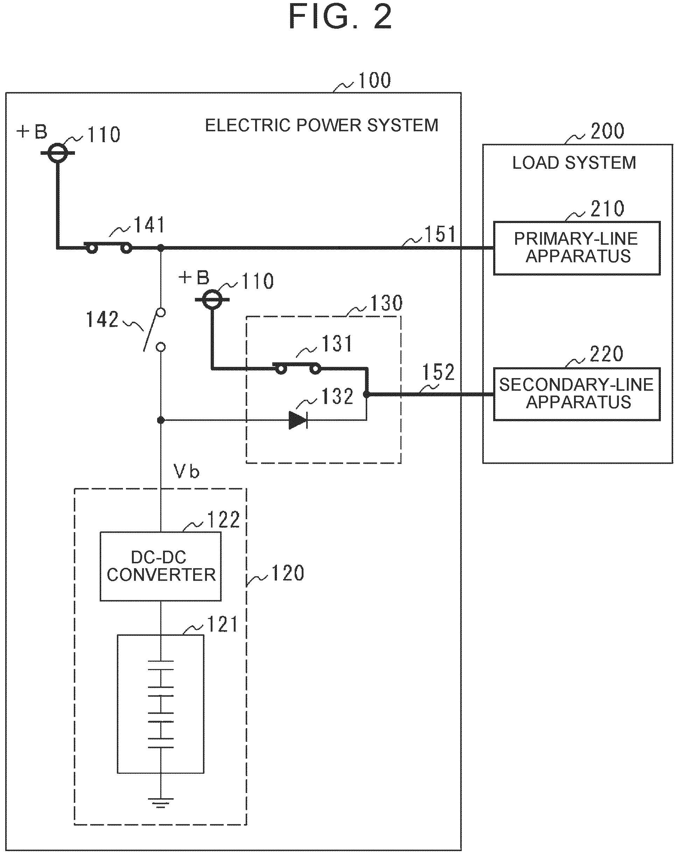

Next, a controlled state in the electric power system 100 according to the embodiment of the disclosure will be described additionally with reference to FIG. 2, FIG. 3, and FIG. 4.

### (1) Backup Standby State

FIG. 2 shows a circuit state in a case of a backup standby state where, in a state where the main power supply 110 has no abnormality, such as a failure, and the electric power system 100 is normal, a function that needs backup control, such as remote parking, is activated and the electric power system 100 is waiting so that backup is available.

As shown in FIG. 2, when the electric power system 100 is in a backup standby state, the first switch 141 and the third switch 131 each are controlled to a conduction state, and the second switch 142 is controlled to an interruption state. When the electric power system 100 is in a backup standby state, the DC-DC converter 122 of the backup power supply 120 is controlled to a state where the output voltage (Vb) is lower than the output voltage (+B) of the main power supply 110 and electric power is dischargeable from the electrical storage unit 121 (discharging control state).

With these controls, in the backup standby state, electric power is supplied from the main power supply 110 to the primary-line apparatus 210 of the load system 200 via the first line 151, and electric power is supplied from the main power supply 110 to the secondary-line apparatus 220 of the load system 200 via the second line 152 (the thick line in FIG. 2).

### (2) Backup Operating State

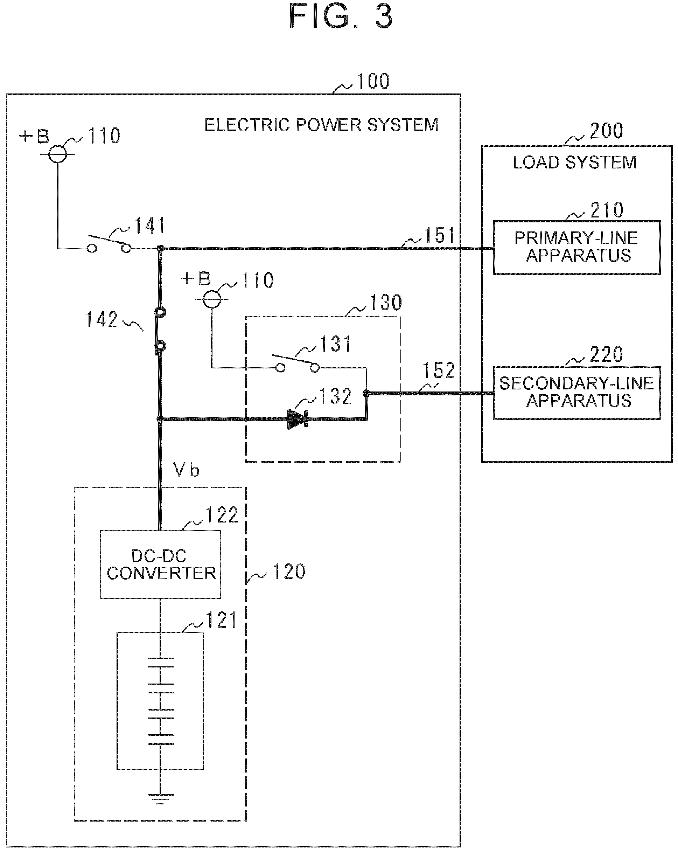

FIG. 3 shows a circuit state in a case of a backup operating state where backup control operates in a state where, while the function that needs backup control, such as remote parking, is active (the state of FIG. 2), there occurs an abnormality, such as a failure, in the main power supply 110 and the electric power system 100 is not normal.

As shown in FIG. 3, when the electric power system 100 is in a backup operating state, the first switch 141 and the third switch 131 each are controlled to an interruption state, and the second switch 142 is controlled to a conduction state. When the third switch 131 is interrupted, the output voltage (Vb) of the backup power supply 120 (DC-DC converter 122) is higher than that at the other end of the third switch 131.

With these controls, in the backup operating state, electric power is supplied from the backup power supply 120 to the primary-line apparatus 210 of the load system 200 via the first line 151, and electric power is supplied from the backup power supply 120 to the secondary-line apparatus 220 of the load system 200 via the second line 152 (the thick line in FIG. 3). The backup power supply 120 starts a backup process for the main power supply 110 in a discharging control state, so the backup power supply 120 is capable of supplying electric power to the load system 200 via the first line 151 and the second line 152 immediately without the necessity of a period of time to switch from the charging control state to the discharging control state.

### (3) Backup Capacity Ensuring State

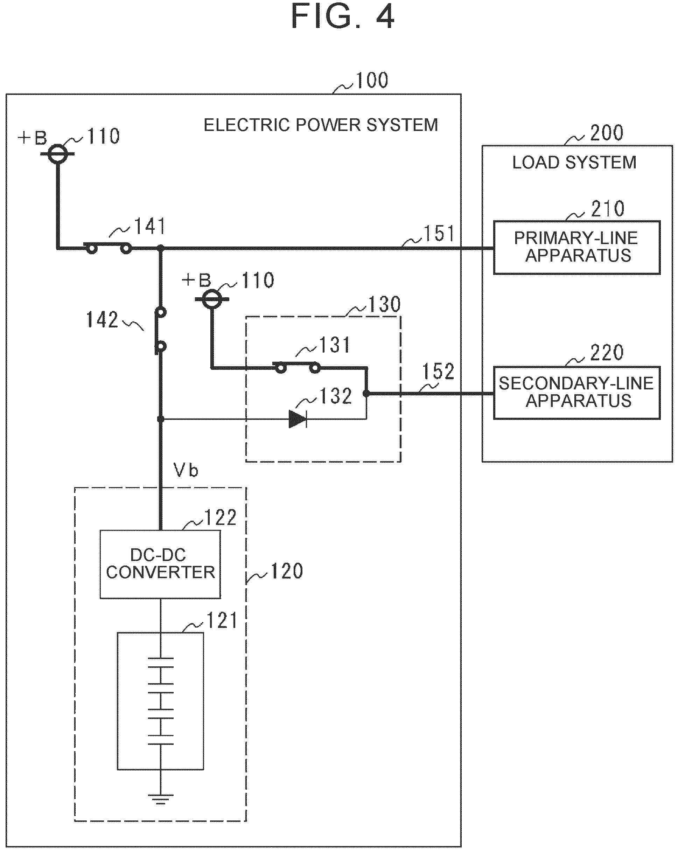

FIG. 4 shows a circuit state in a case of a backup capacity ensuring state where, when the charged capacity of the backup power supply 120 is shorter than a backup capacity, the electrical storage unit 121 of the backup power supply 120 is charged with electric power of the main power supply 110.

As shown in FIG. 4, when the electric power system 100 is in the backup capacity ensuring state, the first switch 141, the second switch 142, and the third switch 131 all are controlled to a conduction state.

With these controls, in the backup capacity ensuring state, electric power is supplied from the main power supply 110 to the primary-line apparatus 210 of the load system 200 via the first line 151, and electric power is supplied from the main power supply 110 to the secondary-line apparatus 220 of the load system 200 via the second line 152 (the thick line in FIG. 4). Furthermore, in the backup capacity ensuring state, electric power is supplied from the main power supply 110 to the backup power supply 120 to charge the electrical storage unit 121 (main power supply pass through).

### Operation and Advantageous Effects

As described above, the electric power system 100 according to the embodiment of the disclosure has the first line 151 and the second line 152 as lines to supply electric power from the main power supply 110 to the load system 200, and the switching unit 130 that outputs electric power of one of the main power supply 110 and the backup power supply 120, having a higher output voltage, is inserted in the second line 152. The second switch 142 capable of switching the two lines between a conduction state and an interruption state is provided between the first line 151 and the second line 152, to make it possible to perform main power supply pass through to the backup power supply 120. In this configuration, the electric power system 100 according to the present embodiment causes backup electric power to be standby for supplying to the load system 200 while controlling the backup power supply 120 to a state of being dischargeable from the electrical storage unit 121 (discharging control state).

Thus, when the main power supply 110 is normal, it is possible to suppress consumption of electric power from the backup power supply 120 (reducing consumption of backup electric power when the main power supply is normal). Even when the main power supply 110 fails and the output voltage decreases or becomes zero and, therefore, an electric power supply source of the switching unit 130 to the load system 200 switches from the main power supply 110 to the backup power supply 120, it is possible to quickly supply electric power from the backup power supply 120 in a discharging control state to the load system 200 (ensuring the response of supplying backup electric power when the main power supply fails).

The embodiment of the disclosure has been described above; however, the disclosure may be regarded as an electric power system, a control method that is executed by the electric power system including a processor and a memory, a control program for executing the control method, a non-transitory computer-readable storage medium storing the control program, a vehicle on which the electric power system is mounted, or the like.

The electric power system according to the disclosure is usable in a vehicle or the like equipped with a load system that needs a redundant power supply configuration.

## Claims

1. An electric power system (100) configured to supply electric power to a load system (200) that needs a redundant power supply configuration, the electric power system (100) comprising:
a main power supply (110) configured to supply electric power to the load system (200) via a first line (151);
a backup power supply (120) used to back up supply of electric power from the main power supply (110); and
a switching unit (130) connected to the main power supply (110) and the backup power supply (120), wherein
the switching unit (130) is configured to
supply electric power from the main power supply (110) to the load system (200) via a second line (152) different from the first line (151) when an output voltage of the main power supply (110) is higher than an output voltage of the backup power supply (120) and
supply electric power of the backup power supply (120) to the load system (200) via the second line (152) when an output voltage of the main power supply (110) is lower than an output voltage of the backup power supply (120).

2. The electric power system (100) according to claim 1, further comprising a switch (142) configured to control an electrical conduction state or an interruption state between the first line (151) and the backup power supply (120), wherein
the switch (142) is configured to, when the backup power supply (120) is charged with electric power of the main power supply (110) and the main power supply (110) fails, control the first line (151) and the backup power supply (120) to a conduction state.

3. The electric power system (100) according to claim 1 or 2, wherein:
the backup power supply (120) includes an electrical storage unit (121) configured to store electric power and a DCDC converter (122) configured to control a charge state or a discharge state of the electrical storage unit (121); and
the DCDC converter (122) is configured to, when electric power allowed to be used for backup is stored in the electrical storage unit (121), output electric power to the switching unit (130) by controlling the electrical storage unit (121) to a discharge state.
